# EUROPEAN PATENT APPLICATION

(11) **EP 4 366 124 A1**
(43) Date of publication of application: **08.05.2024**
(21) Application number: 22831321.9
(22) Date of filing: 02.04.2022
(51) Int. Cl.: H02J 7/04

(54) **CONTROL CIRCUIT, CIRCUIT BOARD ASSEMBLY, AND BATTERY PARALLEL SYSTEM**

(30) Priority: 30.06.2021 CN 202110738427
(71) Applicant: ZTE Corporation, Shenzhen, Guangdong 518057 (CN)
(72) Inventor: SHAO, Yunlu, Shenzhen, Guangdong 518057 (CN); WANG, Fangchun, Shenzhen, Guangdong 518057 (CN); YI, Lingsong, Shenzhen, Guangdong 518057 (CN); WANG, Wenbing, Shenzhen, Guangdong 518057 (CN); GAO, Cheng, Shenzhen, Guangdong 518057 (CN); PENG, Yu, Shenzhen, Guangdong 518057 (CN)
(74) Representative: Boult Wade Tennant LLP
(86) International application number: PCT/CN2022/085165
(87) International publication number: WO 2023/273490

(57) **Abstract**

Provided are a control circuit (100), a circuit board assembly, and a battery (200) parallel system. The control circuit (100) is disposed between a battery (200) and a busbar (300), and the control circuit (100) comprises an acquisition unit (1), a control unit (2), and a current-limiting circuit (3). The control unit (2) is used to start timing when the current of a positive electrode of the battery (200) is greater than a preset threshold, and after the duration of the voltage of the positive electrode of the battery (200) greater than a first preset threshold is greater than a preset time, reduces the current of the positive electrode of the battery (200) by means of controlling the current-limiting circuit (3), until the current of the positive electrode of the battery (200) is less than or equal to the preset threshold.

## Description

### CROSS REFERENCE TO RELATED APPLICATIONS

The present application is proposed based on and claims priority to the Chinese patent application No. 202110738427.1 filed on June 30, 2021, the entire content of which is incorporated herein by reference.

### TECHNICAL FIELD

Embodiments of the present application relate to the field of circuit design, in particular to a control circuit, a circuit board assembly, and a battery parallel system.

### BACKGROUND

With the increasing demand for electric quantity from users, the demand of the market for high-endurance and large-capacity energy storage batteries is also increasing. The use of parallel operation of a plurality of batteries to increase the total reserve of electricity of the energy storage batteries has gradually become a major direction in the research and development of the energy storage batteries.

At present, when the plurality of batteries are operating in parallel, no matter in a process that the plurality of batteries in parallel discharge to the load jointly or in a process that the plurality of batteries in parallel are charged by an external power source, the current on a connection line between each battery and a busbar used to connect the load or the external power source is usually too high, and the battery will often work in an overcurrent operation state, resulting in short service life and low reliability.

### SUMMARY

To solve the above problems, an embodiment of the present application provides a control circuit, disposed between a battery and a busbar. The control circuit includes an acquisition unit, a control unit, and a current-limiting circuit; a positive electrode of the battery is connected to a first end of the current-limiting circuit, a second end of the current-limiting circuit is connected to a positive electrode of the busbar, a negative electrode of the busbar is connected to a third end of the current-limiting circuit, a fourth end of the current-limiting circuit is connected to a negative electrode of the battery, an input end of the acquisition unit is connected to the positive electrode of the battery, an output end of the acquisition unit is connected to an input end of the control unit, and an output end of the control unit is connected to the current-limiting circuit; the acquisition unit is used to acquire a current of the positive electrode of the battery; and the control unit is used to start timing when the current of the positive electrode of the battery is greater than a preset threshold, and reduce, after a duration in which the current of the positive electrode of the battery is greater than the preset threshold is greater than a preset time, the current of the positive electrode of the battery by means of controlling the current-limiting circuit, until the current of the positive electrode of the battery is less than or equal to the preset threshold.

An embodiment of the present application further provides a circuit board assembly, including the above control circuit.

An embodiment of the present application further provides a battery parallel system, including each battery for parallel operation, the above circuit board assembly, a busbar connected to each battery through each circuit board assembly, and an upper computer connected to each circuit board assembly.

### BRIEF DESCRIPTION OF THE DRAWINGS

Fig. 1 is a schematic block diagram of a battery parallel system according to an embodiment of the present application;
Fig. 2 is a first circuit diagram of a control circuit according to an embodiment of the present application;
Fig. 3 is a first control flow diagram of a control unit in a control circuit according to an embodiment of the present application;
Fig. 4 is a second circuit diagram of a control circuit according to an embodiment of the present application;
Fig. 5 is a second control flow diagram of a control unit in a control circuit according to an embodiment of the present application;
Fig. 6 is a third circuit diagram of a control circuit according to an embodiment of the present application;
Fig. 7 is a third control flow diagram of a control unit in a control circuit according to an embodiment of the present application;
Fig. 8 is a first circuit diagram of a control circuit equipped with a full-bridge direct-current converting circuit according to an embodiment of the present application;
Fig. 9 is a second circuit diagram of a control circuit equipped with a full-bridge direct-current converting circuit according to an embodiment of the present application; and
Fig. 10 is a fourth control flow diagram of a control unit in a control circuit according to an embodiment of the present application.

### DETAILED DESCRIPTION

In order to make the objective, technical solutions and advantages of embodiments of the present application clearer, all embodiments of the present application will be described below in detail with reference to accompanying drawings. However, the ordinarily skilled in the art can understand that in various embodiments of the present application, many technical details have been proposed to enable readers to better understand the present application. However, even without these technical details and various changes and modifications based on the following embodiments, the technical solution required for protection in the present application can still be achieved. The division of the following embodiments is for convenience in description and should not constitute any limitations on the specific implementations of the present application. All the embodiments can be combined and referenced with each other without contradiction.

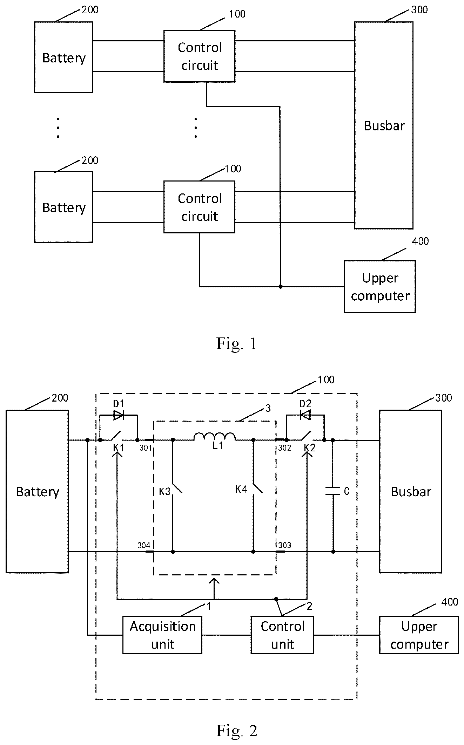

An embodiment of the present application relates to a control circuit. Please refer to Fig. 1, the control circuit 100 is disposed in a battery parallel system, specifically disposed between each battery 200 for parallel operation and a busbar 300 connected to each battery 200. The control circuit 100 is used to control a current of each battery 200 for parallel operation to be within a normal range. The control circuit 100 specifically includes an acquisition unit 1, a control unit 2, and a current-limiting circuit 3.

A positive electrode of the battery 200 is connected to a first end 301 of the current-limiting circuit 3, a second end 302 of the current-limiting circuit 3 is connected to a positive electrode of the busbar 300, a negative electrode of the busbar 300 is connected to a third end 303 of the current-limiting circuit 3, a fourth end 304 of the current-limiting circuit 3 is connected to a negative electrode of the battery 200, an input end 1 of the acquisition unit 1 is connected to the positive electrode of the battery 200, an output end 12 of the acquisition unit 1 is connected to an input end 21 of the control unit 2, and an output end 22 of the control unit 2 is connected to the current-limiting circuit 3.

The acquisition unit 1 acquires a current of the positive electrode of the battery, and the control unit 2 starts timing when the current of the positive electrode of the battery 200 is greater than a preset threshold, and reduces, after the duration in which the current of the positive electrode of the battery 200 is greater than the preset threshold is greater than a preset time, the current of the positive electrode of the battery 200 by means of controlling the current-limiting circuit 3, until the current of the positive electrode of the battery 200 is less than or equal to the preset threshold.

In this embodiment, the control circuit, a circuit board assembly, and the battery parallel system are provided, which can control a current of batteries in parallel operation to be within a normal range, prolong the service life of the batteries, and improve circuit reliability. In the present application, the control circuit is disposed between the battery and the busbar. The control circuit may acquire the current of the positive electrode of the battery, and the control unit may start timing when the current of the positive electrode of the battery is greater than the preset threshold, and reduce, after the duration in which the current of the positive electrode of the battery is greater than the preset threshold is greater than a preset time, the current of the positive electrode of the battery by means of controlling the current-limiting circuit, until the current of the positive electrode of the battery is less than or equal to the preset threshold. The present application can effectively monitor and adjust the current of the positive electrode of the battery by disposing the control circuit. Moreover, since the current of the positive electrode of the battery is not always stable, for example, in a process of connecting an external power source to the battery through the busbar, the current of the positive electrode of the battery may be greater than the preset threshold for a short time, but when the current of the positive electrode of the battery is stabilized, the current of the positive electrode of the battery may be not greater than the preset threshold. In order to avoid a problem of reducing the efficiency of transmitting electrical energy between the battery and the busbar while still reducing the current of the positive electrode of the battery in this situation, the present application adjusts the preset time and reduces the current of the positive electrode of the battery by means of controlling the current-limiting circuit through the control unit after the current of the positive electrode of the battery is greater than the preset threshold and lasts for the preset time, so as to adjust the current of the positive electrode of the battery after it is determined that the battery is stably operated under an overvoltage operating state or an overcurrent operating state, thereby ensuring the efficiency of transmitting the electrical energy between the battery and the busbar to a certain extent.

This implementation can effectively monitor and adjust the current of the positive electrode of the battery to be within the normal range by disposing the control circuit, thereby prolonging the service life of the battery, improving the circuit reliability, and meanwhile, improving the output efficiency of the battery.

In one embodiment, please refer to Fig. 2, the control circuit 100 further includes a voltage stabilizing capacitor C. A first end of the voltage stabilizing capacitor C is connected to a positive electrode of the busbar 300, a second end of the voltage stabilizing capacitor C is connected to a negative electrode of the busbar 300, or the first end of the voltage stabilizing capacitor C is connected to the positive electrode of the battery 200, and the second end of the voltage stabilizing capacitor C is connected to the negative electrode of the battery 200. It may also be possible to dispose the voltage stabilizing capacitor C between the positive electrode and the negative electrode of the busbar 300 as well as between the positive electrode and the negative electrode of the battery 200 to stabilize a voltage. Fig. 2 shows an example that the voltage stabilizing capacitor C is disposed between the positive electrode and the negative electrode of the busbar 300. In this embodiment, by disposing the voltage stabilizing capacitors at both ends of the busbar, the voltages at both ends of the busbar can be effectively stabilized. By disposing the voltage stabilizing capacitors at both ends of the battery, the voltages at both ends of the battery can be effectively stabilized, further improving the reliability of the circuit.

In one embodiment, please refer to Fig. 2, the control circuit 100 further includes: a first switch tube K1, a second switch tube K2, a first diode D1, and a second diode D2. The first switch tube K1 and the second switch tube K2 may be MOSs.

The positive electrode of the battery 200 is connected to the first end 301 of the current-limiting circuit 3 through the first switch tube K1, the second end 302 of the current-limiting circuit 3 is connected to the positive electrode of the busbar 300 through the second switch tube K2, a positive electrode/negative electrode of the first diode D1 is connected to the positive electrode of the battery 200, a negative electrode/positive electrode of the first diode D1 is connected to the first end 301 of the current-limiting circuit 3, a negative electrode/positive electrode of the second diode D2 is connected to the second end 302 of the current-limiting circuit 3, a positive electrode/negative electrode of the second diode D2 is connected to the positive electrode of the busbar 300, and the output end of the control unit 2 is further connected to a control end of the first switch tube K1 and a control end of the second switch tube K2 respectively.

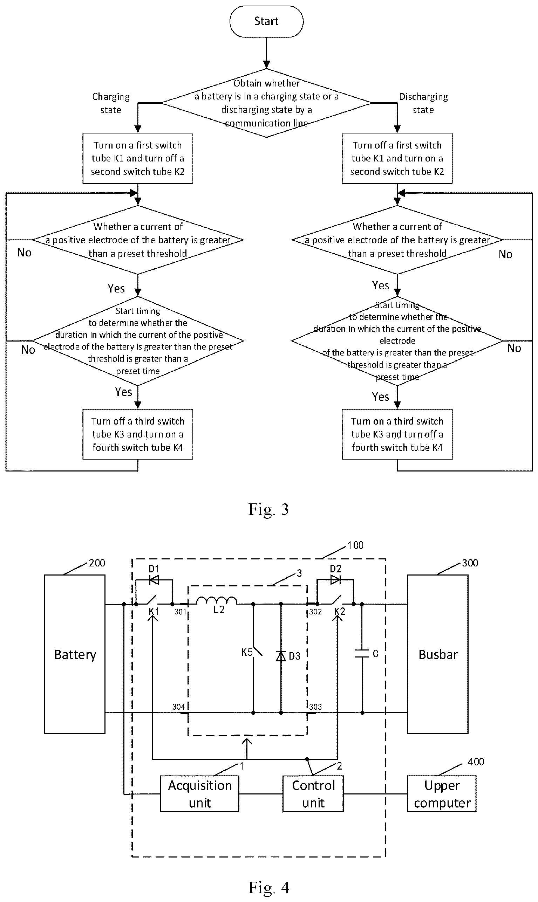

The control unit 2 may turn on/turn off the first switch tube K1 and turn off/turn on the second switch tube K2 when determining that the battery 200 is in a charging state; and turn off/turn on the first switch tube K1 and turn on/turn off the second switch tube K2 when determining that the battery 200 is in a discharging state. Please refer to a control flow diagram of the control unit 2 in Fig. 3, which is illustrated by taking directions of D1 and D2 in Fig. 2 as an example. At this time, the control unit 2 may turn on the first switch tube K1 and turn off the second switch tube K2 when determining that the battery 200 is in the charging state; and turn off the first switch tube K1 and turn on the second switch tube K2 when determining that the battery 200 is in the discharging state.

Specifically, this embodiment further provides a specific implementation for the control unit to determine that the battery is in the charging/discharging state. Please refer to Fig. 2, the input end of the control unit 2 is further connected to an upper computer 400 for outputting a charging instruction or a discharging instruction, specifically, the input end of the control unit 2 is connected to the upper computer through a communication line. The communication line may be CAN/485/SCI. The control unit 2 may determine that each battery 200 is currently in the charging state after receiving the charging instruction output by the upper computer 400; and determine that each battery 200 is currently in the discharging state after receiving the discharging instruction output by the upper computer 400.

In this embodiment, there may be differences in energy storage states of different batteries, which may lead to a situation that the batteries with more energy storage charge the batteries with less energy storage through the busbar when each battery is in the charging or discharging state, causing internal consumption and then affecting the charging and discharging efficiency of the entire battery parallel system. The present application disposes the first switch tube and the first diode connected in parallel, as well as the second switch tube and the second diode connected in parallel, in a transmission line between the battery and the busbar. The directions of the current that can be turned on by the first diode and the second diode are opposite, and the control unit may only form a turn-on path from the busbar to the battery by controlling the on/off state of the first switch tube and the second switch tube when the battery is in the charging state, and similarly only form a turn-on path from the battery to the busbar when the battery is in the discharging state, thereby effectively reducing the internal friction generated by mutual charging between the batteries and improving the charging and discharging efficiency of the entire battery parallel system.

In one embodiment, a specific implementation of the current-limiting circuit 3 is provided. Please refer to the specific circuit diagram of Fig. 2, the current-limiting circuit 3 includes: a first inductor L1, a third switch tube K3, and a fourth switch tube K4. The third switch tube K3 and the fourth switch tube K4 may be MOSs.

A circuit connection structure is as follows:
a first end of the first inductor L1 serves as the first end 301 of the current-limiting circuit 3, a second end of the first inductor L1 serves as the second end 302 of the current-limiting circuit 3, a first end of the third switch tube K3 is connected to the first end of the first inductor L1, a second end of the third switch tube K3 serves as the fourth end 304 of the current-limiting circuit 3, a first end of the fourth switch tube K4 is connected to the second end of the first inductor L1, a second end of the fourth switch tube K4 serves as the third end 303 of the current-limiting circuit 3, the second end of the third switch tube K3 is connected to the second end of the fourth switch tube K4, and the output end of the control unit 2 is respectively connected to a control end of the third switch tube K3 and a control end of the fourth switch tube K4.

Please refer to the control flow diagram of the control unit 2 in Fig. 3, the control unit 2 may start timing when the battery 200 is in the charging state and the current of the positive electrode of the battery 200 is greater than the preset threshold, and turn off the third switch tube K3 and turn on the fourth switch tube K4 after the duration of the current of the positive electrode of the battery 200 greater than the preset threshold is greater than the preset time; and remain the on/off state of the third switch tube K3 and the fourth switch tube K4 unchanged after the current of the positive electrode of the battery 200 is less than or equal to the preset threshold, or the duration, obtained by timing, of the current of the positive electrode of the battery 200 greater than the preset threshold is less than or equal to the preset time. The control unit 2 may start timing when the battery 200 is in the discharging state and the current of the positive electrode of the battery 200 is greater than the preset threshold, and turn on the third switch tube K3 and turn off the fourth switch tube K4 after the duration of the current of the positive electrode of the battery 200 greater than the preset threshold is greater than the preset time; and remain the on/off state of the third switch tube K3 and the fourth switch tube K4 unchanged after the current of the positive electrode of the battery 200 is less than or equal to the preset threshold, or the duration, obtained by timing, of the current of the positive electrode of the battery 200 greater than the preset threshold is less than or equal to the preset time.

Specifically, after the current of the positive electrode of the battery 200 is less than or equal to the preset threshold, or the duration, obtained by timing, of the current of the positive electrode of the battery 200 greater than the preset threshold is less than or equal to the preset time, that is, when the current of the positive electrode of the battery 200 is not continuously in an excessive state, both the third switch tube K3 and the fourth switch tube K4 are controlled to be in a turn-off state, regardless of whether the battery 200 is in the charging state or the discharging state, transmission may be directly performed between the battery 200 and the busbar 300 at this time, and the first inductor L1 only controls the gradual increase or decrease of the current on the connection line to avoid the impact of sudden increase and sudden decrease of the current on the service life of the battery. At this time, the current-limiting circuit 3 does not work.

If the current of the positive electrode of the battery 200 continues to be greater than the preset threshold, when the battery 200 is in the charging state, electrical energy is transmitted from the busbar 300 to the battery 200. At this time, the control unit 2 may control only the fourth switch tube K4 to be turned on, and a portion of the current flowing from the positive electrode of the busbar 300 may directly flow back to the negative electrode of the busbar 300 from the fourth switch tube K4, thus limiting the amount of the current transmitted from the busbar 300 to the battery 200. When the battery 200 is in the discharging state, the electrical energy is transmitted from the battery 200 to the busbar 300. At this time, the control unit 2 may control only the third switch tube K3 to be turned on, and a portion of the current flowing from the positive electrode of the battery 200 may directly flow back to the negative electrode of the battery 200 from the third switch tube K3, thus limiting the amount of the current transmitted from the battery 200 to the busbar 300.

In this embodiment, the control circuit for limiting the current of the positive electrode of the battery is provided. The current-limiting circuit specifically includes a first inductor, used to limit the gradual increase or decrease of the current on the connection line between the battery and the busbar, avoiding the impact of the sudden increase and sudden decrease of the current on the service life of the battery. If the current of the positive electrode of the battery is within the preset threshold, or if the duration, obtained by timing, of the current of the positive electrode of the battery greater than the preset threshold is within the preset time, that is, if the battery is not continuously in an overcurrent state, the control unit may turn off the third switch tube and the fourth switch tube, and the battery is only connected to the busbar through the first inductor. When the battery is in the charging state, if the current of the positive electrode of the battery is greater than the preset threshold and lasts for the preset time, the control unit may control only the fourth switch tube to be turned on. At this time, the current output by the busbar may flow back to the busbar through the fourth switch tube, without flowing to the battery, thereby effectively ensuring that the battery may not continuously in the overcurrent state. When the battery is in the discharging state, if the current of the positive electrode of the battery is greater than the preset threshold and lasts for the preset time, the control unit may control only the third switch tube to be turned on. At this time, the current output by the battery may flow back to the battery through the third switch tube, without flowing to an outside load, thereby effectively ensuring that the load may not continuously in the overcurrent state, and improving the reliability of the circuit.

In one embodiment, a specific implementation of the current-limiting circuit 3 is provided. Please refer to Fig. 4, the current-limiting circuit 3 includes: a second inductor L2, a fifth switch tube K5, and a third diode D3. The fifth switch tube K5 may be an MOS.

A circuit connection structure is as follows:
a first end of the second inductor L2 serves as the first end 301 of the current-limiting circuit 3, a second end of the second inductor L2 serves as the second end 302 of the current-limiting circuit 3, a first end of the fifth switch tube K5 is connected to the second end of the second inductor L2, a second end of the fifth switch tube K5 serves as the fourth end 304 of the current-limiting circuit 3, a negative electrode of the third diode D3 is connected to the second end of the second inductor L2, a positive electrode of the third diode D3 serves as the third end 303 of the current-limiting circuit 3, the positive electrode of the third diode D3 is connected to the second end of the fifth switch tube K5, the negative electrode of the first diode D1 is connected to the positive electrode of the battery 200, the positive electrode of the first diode D1 is connected to the first end 301 of the current-limiting circuit 3, the positive electrode of the second diode D2 is connected to the second end 302 of the current-limiting circuit 3, the negative electrode of the second diode D2 is connected to the positive electrode of the busbar 300, and the output end of the control unit 2 is connected to a control end of the fifth switch tube K5.

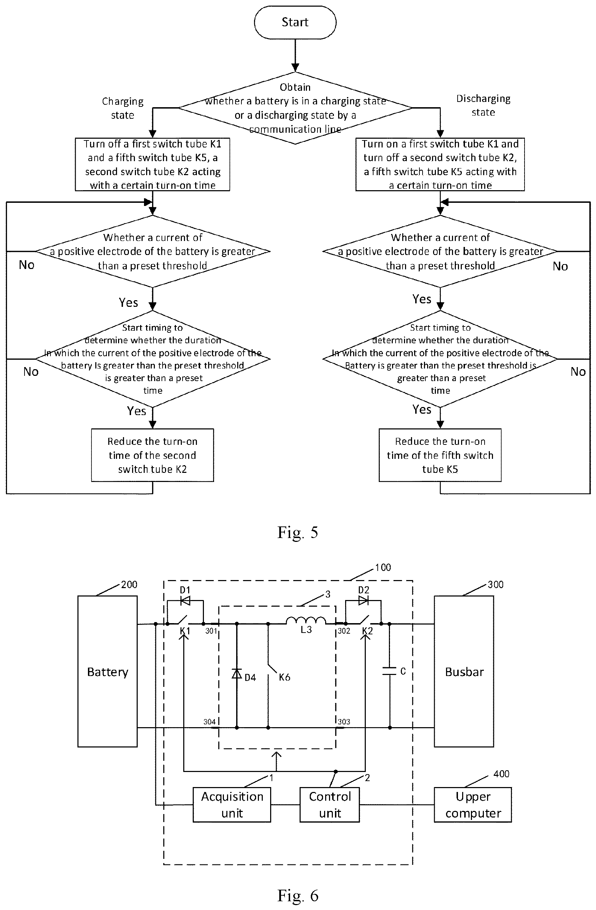

Please refer to the control flow diagram of the control unit 2 in Fig. 5, which is illustrated by taking the directions of D1 and D2 in Fig. 4 as an example, the control unit 2 may turn off the first switch tube K1 and the fifth switch tube K5 when the battery 200 is in the charging state, and adjust the current output to the positive electrode of the battery 200 only by controlling the turn-on or turn-off of the second switch tube K2; and the control unit 2 may further turn on the first switch tube K1 and turn off the second switch tube K2 when the battery 200 is in the discharging state, and adjust the current output to the positive electrode of the busbar 300 only by controlling the turn-on or turn-off of the fifth switch tube K5.

Specifically, when the battery 200 is in the charging state, the control unit 2 turns off the first switch tube K1 and the fifth switch tube K5. When the control unit 2 controls the second switch tube K2 to be turned on, the current flows out of the positive electrode of the busbar 300, and flows to the positive electrode of the battery 200 after sequentially passing through the second switch tube K2, the second inductor L2, and the first diode D1. At this time, the second inductor L2 begins to be charged, causing the current of the positive electrode of the battery 200 to gradually increase, and when the current of the positive electrode of the battery 200 is greater than or equal to a preset value (less than a current of the positive electrode of the busbar 300), the control unit 2 may control the second switch tube K2 to be turned off. At this time, the second inductor L2, the first diode D1, the battery 200, and the third diode D3 may form a turn-on loop, and only the second inductor L2 discharges in this turn-on loop until the current of the positive electrode of the battery 200 is less than the preset value. The control unit 2 then controls the second switch tube K2 to be turned on, so as to increase the current of the positive electrode of the battery 200. By repeating in this way, the current of the positive electrode of the battery 200 may vary around a range less than the preset value of the current of the positive electrode of the busbar 300. Technicians can limit the current of the positive electrode of the battery 200 by controlling a turn-on time of the second switch tube K2.

When the battery 200 is in the discharging state, the control unit 2 turns on the first switch tube K1 and turns off the second switch tube K2. When the control unit 2 controls the fifth switch tube K5 to be turned on, the current flows out of the positive electrode of the battery 200, and flows to the negative electrode of the battery 200 after sequentially passing through the first switch tube K1, the second inductor L2, and the fifth switch tube K5. At this time, the second inductor L2 begins to be charged. When the second inductor L2 is charged to a certain amount of electricity, the control unit 2 may control the fifth switch tube K5 to be turned off. At this time, electrical energy on the second inductor L2 and electrical energy output by the positive electrode of the battery 200 may be jointly output to the positive electrode of the busbar 300 through the second diode D2, so that the current of the positive electrode of the busbar 300 is greater than or equal to the preset value (greater than the current of the positive electrode of the battery 200). When the current of the positive electrode of the busbar 300 is less than the preset value, the control unit 2 may control the fifth switch tube K5 to be turned on, and continue to charge the second inductor L2 by the battery 200. By repeating in this way, the current of the positive electrode of the busbar 300 may vary around a range greater than the preset value of the current of the positive electrode of the battery 200. Technicians can limit the current of the positive electrode of the busbar 300 by controlling a turn-on time of the fifth switch tube K5.

In this embodiment, the present application forms a bidirectional direct-current converting circuit by setting the second inductor, the fifth switch tube, and the third diode, together with the first switch tube, the second switch tube, the first diode, and the second diode which are disposed to prevent backflow. The bidirectional direct-current converting circuit is specifically used to reduce the current on a busbar side and then output the same to a battery side by controlling the second switch tube to be turned on or turned off when the battery is in the charging state, and increase the current on the battery side and then output the same to the busbar side by controlling the fifth switch tube to be turned on or turned off when the battery is in the discharging state. The control unit can control the magnitude of the current transmitted by the busbar to the battery, or the magnitude of the current transmitted by the battery to the busbar. Moreover, the present application directly utilizes the first switch tube, the second switch tube, the first diode, and the second diode which are used to prevent backflow together to form the bidirectional direct-current converting circuit, which simplifies a topology structure of the circuit to some extent and reduces costs.

In one embodiment, a specific implementation of the current-limiting circuit 3 is provided. Please refer to Fig. 6, the current-limiting circuit 3 includes: a third inductor L3, a sixth switch tube K6, and a fourth diode D4. The sixth switch tube K6 may be an MOS.

A circuit connection structure is as follows:
a first end of the third inductor L3 serves as the first end 301 of the current-limiting circuit 3, a second end of the third inductor L3 serves as the second end 302 of the current-limiting circuit 3, a first end of the sixth switch tube K6 is connected to the first end of the third inductor L3, a second end of the sixth switch tube K6 serves as the third end 303 of the current-limiting circuit 3, a negative electrode of the fourth diode D4 is connected to the first end of the third inductor L3, a positive electrode of the fourth diode D4 serves as the fourth end 304 of the current-limiting circuit 3, the second end of the sixth switch tube K6 is connected to the positive electrode of the fourth diode D4, and the output end of the control unit 2 is connected to a control end of the sixth switch tube K6.

In order to utilize both the first diode D1 and the second diode D2 simultaneously to ensure the normal operation of the circuit, only one of the following connection forms can be used for the first diode D1 and the second diode D2: the negative electrode of the first diode D1 is connected to the positive electrode of the battery 200, the positive electrode of the first diode D1 is connected to the first end 301 of the current-limiting circuit 3, the positive electrode of the second diode D2 is connected to the second end 302 of the current-limiting circuit 3, and the negative electrode of the second diode D2 is connected to the positive electrode of the busbar 300.

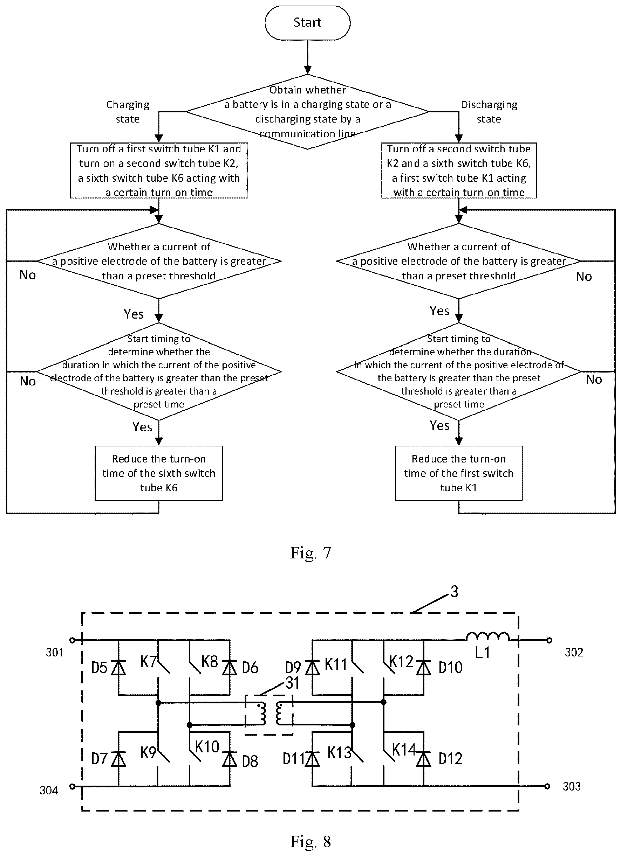

Please refer to the control flow diagram of the control unit 2 in Fig. 7, which is illustrated by taking the directions of D1 and D2 in Fig. 6 as an example, the control unit 2 may turn off the first switch tube K1 and turn on the second switch tube K2 when the battery 200 is in the charging state, and adjust the current output to the positive electrode of the battery 200 only by controlling the turn-on or turn-off of the sixth switch tube K6; and turn off the second switch tube K2 and the sixth switch tube K6 when the battery 200 is in the discharging state, and adjust the current output to the positive electrode of the busbar 300 only by controlling the turn-on or turn-off of the first switch tube K1.

Specifically, when the battery 200 is in the charging state, the control unit 2 turns off the first switch tube K1 and turns on the second switch tube K2. When the control unit 2 controls the sixth switch tube K6 to be turned on, the current flows out of the positive electrode of the busbar 300, and flows to the negative electrode of the busbar 300 after sequentially passing through the second switch tube K2, the third inductor L3, and the sixth switch tube K6. At this time, the third inductor L3 begins to be charged. When the third inductor L3 is charged to a certain amount of electricity, the control unit 2 may control the sixth switch tube K6 to be turned off. At this time, electrical energy on the third inductor L3 and electrical energy output by the positive electrode of the busbar 300 may be jointly output to the positive electrode of the battery 200 through the first diode D1, so that the current of the positive electrode of the battery 200 is greater than or equal to the preset value (greater than the current of the positive electrode of the busbar 300). When the current of the positive electrode of the battery 200 is less than the preset value, the control unit 2 may control the sixth switch tube K6 to be turned on, and continue to charge the third inductor L3 by the busbar 300. By repeating in this way, the current of the positive electrode of the battery 200 may vary around a range greater than the preset value of the current of the positive electrode of the busbar 300. Technicians can limit the current of the positive electrode of the battery 200 by controlling a turn-on time of the sixth switch tube K6.

When the battery 200 is in the discharging state, the control unit 2 turns off the second switch tube K2 and the sixth switch tube K6. When the control unit 2 controls the first switch tube K1 to be turned on, the current flows out of the positive electrode of the battery 200, and flows to the positive electrode of the busbar 300 after sequentially passing through the first switch tube K1, the third inductor L3, and the second diode D2. At this time, the third inductor L3 begins to be charged, causing the current of the positive electrode of the busbar 300 to gradually increase, and when the current of the positive electrode of the busbar 300 is greater than or equal to a preset value (less than the current of the positive electrode of the battery 200), the control unit 2 may control the first switch tube K1 to be turned off. At this time, the third inductor L3, the second diode D2, the busbar 300, and the fourth diode D4 may form a turn-on loop, and only the third inductor L3 discharges in this turn-on loop until the current of the positive electrode of the busbar 300 is less than the preset value. The control unit 2 then controls the first switch tube K1 to be turned on, so as to increase the current of the positive electrode of the busbar 300. By repeating in this way, the current of the positive electrode of the busbar 300 may vary around a range less than the preset value of the current of the positive electrode of the battery 200. Technicians can limit the current of the positive electrode of the busbar 300 by controlling a turn-on time of the first switch tube K1.

In this embodiment, the present application forms a bidirectional direct-current converting circuit by setting the third inductor, the sixth switch tube, and the fourth diode, together with the first switch tube, the second switch tube, the first diode, and the second diode which are disposed to prevent backflow. The bidirectional direct-current converting circuit is specifically used to increase the current on a busbar side and then output the same to a battery side by controlling the sixth switch tube to be turned on or turned off when the battery is in the charging state, and reduce the current on the battery side and then output the same to the busbar side by controlling the first switch tube to be turned on or turned off when the battery is in the discharging state. The control unit can control the magnitude of the current transmitted by the busbar to the battery, or the magnitude of the current transmitted by the battery to the busbar. Moreover, the present application directly utilizes the first switch tube, the second switch tube, the first diode, and the second diode which are used to prevent backflow together to form the bidirectional direct-current converting circuit, which simplifies a topology structure of the circuit to some extent and reduces costs.

In one embodiment, a specific implementation of the current-limiting circuit 3 is provided. Please refer to Fig. 8, the current-limiting circuit 3 includes: a first inductor L1 and a full-bridge direct-current converting circuit.

A circuit connection structure is as follows:
please refer to Fig. 8, a first end of the full-bridge direct-current converting circuit serves as the first end 301 of the current-limiting circuit 3, a second end of the full-bridge direct-current converting circuit is connected to a first end of the first inductor L1, a second end of the first inductor L1 serves as the second end 302 of the current-limiting circuit 3, a third end of the full-bridge direct-current converting circuit serves as the third end 303 of the current-limiting circuit 3, a fourth end of the full-bridge direct-current converting circuit serves as the fourth end 304 of the current-limiting circuit 3, and the control unit 2 is connected to each switch tube of the full-bridge direct-current converting circuit.

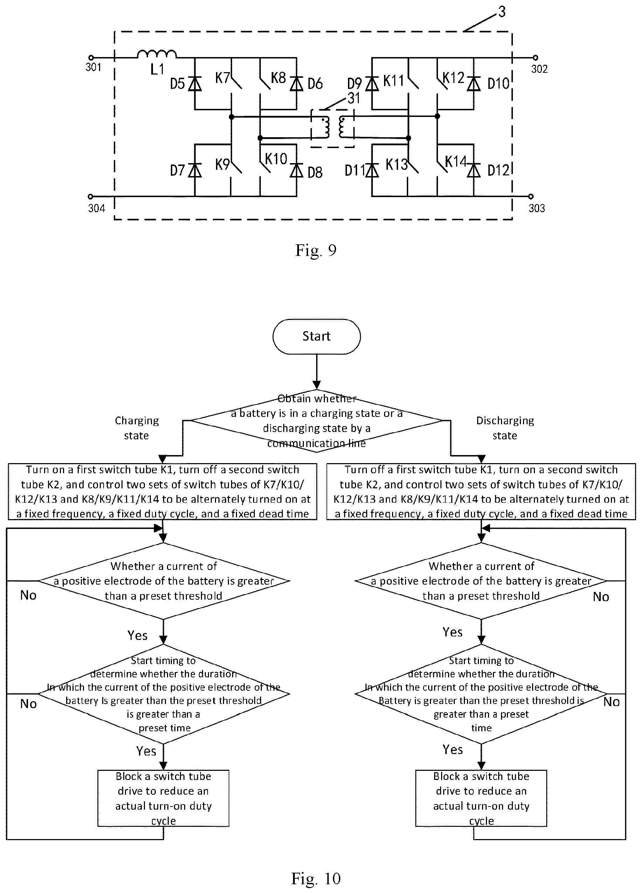

Or, please refer to Fig. 9, the first end of the first inductor L1 serves as the first end 301 of the current-limiting circuit 3, the second end of the first inductor L1 is connected to the first end of the full-bridge direct-current converting circuit, the second end of the full-bridge direct-current converting circuit serves as the second end 302 of the current-limiting circuit 3, the third end of the full-bridge direct-current converting circuit serves as the third end 303 of the current-limiting circuit 3, the fourth end of the full-bridge direct-current converting circuit serves as the fourth end 304 of the current-limiting circuit 3, and the control unit 2 is connected to each switch tube of the full-bridge direct-current converting circuit. Each switch tube may be an MOS, and the control unit 2 is specifically connected to a gate of each MOS.

Obviously, the difference between Fig. 8 and Fig. 9 is only in the connection position between the full-bridge direct-current converting circuit and the first inductor L1.

The control unit 2 may control the turn-on or turn-off of each switch tube of the full-bridge direct-current converting circuit with a fixed turn-on duty cycle after the current of the positive electrode of the battery 200 is less than or equal to the preset threshold, or the duration of the current of the positive electrode the battery 200 greater than the preset threshold is less than the preset time; and control the turn-on or turn-off of each switch tube of the full-bridge direct-current converting circuit with a preset turn-on duty cycle after the current of the positive electrode of the battery 200 is greater than the preset threshold and lasts for a preset time, wherein the preset turn-on duty cycle is less than the fixed turn-on duty cycle.

Specifically, the full-bridge direct-current converting circuit specifically includes: please refer to Fig. 8 or Fig. 9, a transformer 31, eight switch tubes K7 to K14, and eight diodes D5 to D12. A negative electrode of the D5 serves as the first end of the full-bridge direct-current converting circuit, the negative electrode of the D5 is connected to a second end of the K7, a second end of the K8, and a negative electrode of the D6 respectively, a positive electrode of the D5 is connected to a first end of the K7, and a positive electrode of the D6 is connected to a first end of the K8. A positive electrode of the D7 serves as the fourth end of the full-bridge direct-current converting circuit, the positive electrode of the D7 is connected to a first end of the K9, a first end of the K10, and a positive electrode of the D8 respectively, and a negative electrode of the D7 is connected to a second end of the K9. The second end of the K9 is connected to the first end of the K7, a negative electrode of the D8 is connected to a second end of the K10, the second end of the K10 is connected to the first end of the K8, a negative electrode of the D10 serves as the second end of the full-bridge direct-current converting circuit, the negative electrode of the D10 is connected to a second end of the K12, a second end of the K11, and a negative electrode of the D9 respectively, and a positive electrode of the D10 is connected to a first end of the K12. A positive electrode of the D9 is connected to a first end of the K11, a positive electrode of the D12 serves as the third end of the full-bridge direct-current converting circuit, the positive electrode of the D12 is connected to a first end of the K14, a first end of the K13, and a positive electrode of the D11 respectively, and a negative electrode of the D12 is connected to a second end of the K14. The second end of the K14 is connected to the first end of the K12, a negative electrode of the D11 is connected to a second end of the K 13, and the second end of the K13 is connected to the first end of the K11. Two ends of a first coil of the transformer 31 are connected to the first end of the K7 and the first end of the K8 respectively. Two ends of a second coil of the transformer 31 are connected to the first end of the K12 and the first end of the K11 respectively. The control unit 2 is connected to control ends of the K7 to the K14 respectively.

Please refer to the control flow diagram of the control unit 2 in Fig. 10, which is illustrated by taking directions of D1 and D2 in Fig. 2 as an example. The control strategy is as follows: the control unit 2 simultaneously controls the turn-on or turn-off of the K7, the K10, the K12, and the K13, and the control unit 2 simultaneously controls the complementary turn-on of the K8, the K9, the K11 and the K14 with the K7, the K10, the K12 and the K13. When the control unit 2 simultaneously controls the turn-on of the K7, the K10, the K12 and the K13, energy can be transmitted between the first coil and the second coil. Assuming that a transmission direction is to transmit the energy from the busbar 300 to the battery 200, when the control unit 2 simultaneously controls the turn-on of the K8, the K9, the K11 and the K14, the energy can also be transmitted between the first coil and the second coil. At this time, the transmission direction is to transmit the energy from the battery 200 to the busbar 300. When the battery 200 is in the charging state, by reducing the turn-on time of the K7, the K10, the K12 and the K13, that is, by reducing the turn-on duty cycle, the time for transmitting the electrical energy from the busbar 300 to the battery 200 can be reduced to limit the current of the positive electrode of the battery 200. Similarly, the current of the positive electrode of the busbar 300 can also be limited.

In this embodiment, the current-limiting circuit may specifically include the full-bridge direct-current converting circuit, and the control unit can limit the magnitude of the transmitted current by reducing the turn-on duty cycle of each switch tube in the full-bridge direct-current converting circuit.

In one example, because the control circuit 10 is internally provided with the first switch tube K1, the second switch tube K2, the first diode D1, and the second diode D2, mutual charging among different energy storage states can be effectively avoided. Therefore, the battery parallel system may be provided with different types of batteries 200, such as a lithium battery and a lead-acid battery, and may also be provided with different current-limiting circuits 3.

An embodiment of the present application relates to a circuit board assembly, including the control circuit of any embodiment.

An embodiment of the present application relates to a battery parallel system, please refer to Fig. 1, including each battery 200 for parallel operation, the circuit board assembly in the above embodiment, a busbar connected to each battery 200 through the circuit board assembly, and an upper computer 400 connected to the circuit board assembly.

The ordinarily skilled in the art can understand that the above implementations are specific embodiments for implementing the present application, and in practical applications, various changes can be made in form and details without deviating from the scope of the present application.

## Claims

1. A control circuit, disposed between a battery and a busbar, and the control circuit comprising an acquisition unit, a control unit, and a current-limiting circuit,
a positive electrode of the battery being connected to a first end of the current-limiting circuit, a second end of the current-limiting circuit being connected to a positive electrode of the busbar, a negative electrode of the busbar being connected to a third end of the current-limiting circuit, a fourth end of the current-limiting circuit being connected to a negative electrode of the battery, an input end of the acquisition unit being connected to the positive electrode of the battery, an output end of the acquisition unit being connected to an input end of the control unit, and an output end of the control unit being connected to the current-limiting circuit;
the acquisition unit being used to acquire a current of the positive electrode of the battery; and
the control unit being used to start timing when the current of the positive electrode of the battery is greater than a preset threshold, and reduce, after a duration wherein the current of the positive electrode of the battery is greater than the preset threshold is greater than a preset time, the current of the positive electrode of the battery by means of controlling the current-limiting circuit, until the current of the positive electrode of the battery is less than or equal to the preset threshold.

2. The control circuit according to claim 1, wherein the control circuit further comprises: a first switch tube, a second switch tube, a first diode, and a second diode,
the positive electrode of the battery is connected to the first end of the current-limiting circuit through the first switch tube, the second end of the current-limiting circuit is connected to the positive electrode of the busbar through the second switch tube, a positive electrode/negative electrode of the first diode is connected to the positive electrode of the battery, a negative electrode/positive electrode of the first diode is connected to the first end of the current-limiting circuit, a negative electrode/positive electrode of the second diode is connected to the second end of the current-limiting circuit, a positive electrode/negative electrode of the second diode is connected to the positive electrode of the busbar, and the output end of the control unit is further connected to a control end of the first switch tube and a control end of the second switch tube respectively; and
the control unit is used to turn on/turn off the first switch tube and turn off/turn on the second switch tube upon the condition that the battery is in a charging state; and turn off/turn on the first switch tube and turn on/turn off the second switch tube upon the condition that the battery is in a discharging state.

3. The control circuit according to claim 1 or 2, wherein the current-limiting circuit comprises a first inductor, a third switch tube, and a fourth switch tube;
a first end of the first inductor serves as the first end of the current-limiting circuit, a second end of the first inductor serves as the second end of the current-limiting circuit, a first end of the third switch tube is connected to the first end of the first inductor, a second end of the third switch tube serves as the fourth end of the current-limiting circuit, a first end of the fourth switch tube is connected to the second end of the first inductor, a second end of the fourth switch tube serves as the third end of the current-limiting circuit, the second end of the third switch tube is connected to the second end of the fourth switch tube, and the output end of the control unit is connected to a control end of the third switch tube and a control end of the fourth switch tube respectively; and
the control unit is specifically used to start timing upon the condition that the battery is in the charging state and when the current of the positive electrode of the battery is greater than the preset threshold, and turn off the third switch tube and turn on the fourth switch tube after the duration wherein the current of the positive electrode of the battery is greater than the preset threshold is greater than the preset time; start timing upon the condition that the battery is in the discharging state and the current of the positive electrode of the battery is greater than the preset threshold, and turn on the third switch tube and turn off the fourth switch tube after the duration wherein the current of the positive electrode of the battery is greater than the preset threshold is greater than the preset time; and maintain an on/off state of the third switch tube and the fourth switch tube upon the condition that the current of the positive electrode of the battery is less than or equal to the preset threshold, or after the duration, obtained by timing, wherein the current of the positive electrode of the battery is greater than the preset threshold is less than or equal to the preset time.

4. The control circuit according to claim 2, wherein the current-limiting circuit comprises a second inductor, a fifth switch tube, and a third diode;
a first end of the second inductor serves as the first end of the current-limiting circuit, a second end of the second inductor serves as the second end of the current-limiting circuit, a first end of the fifth switch tube is connected to the second end of the second inductor, a second end of the fifth switch tube serves as the fourth end of the current-limiting circuit, a negative electrode of the third diode is connected to the second end of the second inductor, a positive electrode of the third diode serves as the third end of the current-limiting circuit, the positive electrode of the third diode is connected to the second end of the fifth switch tube, the negative electrode of the first diode is connected to the positive electrode of the battery, the positive electrode of the first diode is connected to the first end of the current-limiting circuit, the positive electrode of the second diode is connected to the second end of the current-limiting circuit, the negative electrode of the second diode is connected to the positive electrode of the busbar, and the output end of the control unit is connected to a control end of the fifth switch tube; and
the control unit is used to turn off the first switch tube and the fifth switch tube upon the condition that the battery is in the charging state, and adjust the current output to the positive electrode of the battery only by controlling turn-on or turn-off of the second switch tube; and turn on the first switch tube and turn off the second switch tube upon the condition that the battery is in the discharging state, and adjust the current output to the positive electrode of the busbar only by controlling turn-on or turn-off of the fifth switch tube.

5. The control circuit according to claim 2, wherein the current-limiting circuit comprises a third inductor, a sixth switch tube, and a fourth diode;
a first end of the third inductor serves as the first end of the current-limiting circuit, a second end of the third inductor serves as the second end of the current-limiting circuit, a first end of the sixth switch tube is connected to the first end of the third inductor, a second end of the sixth switch tube serves as the third end of the current-limiting circuit, a negative electrode of the fourth diode is connected to the first end of the third inductor, a positive electrode of the fourth diode serves as the fourth end of the current-limiting circuit, the second end of the sixth switch tube is connected to the positive electrode of the fourth diode, the negative electrode of the first diode is connected to the positive electrode of the battery, the positive electrode of the first diode is connected to the first end of the current-limiting circuit, the positive electrode of the second diode is connected to the second end of the current-limiting circuit, the negative electrode of the second diode is connected to the positive electrode of the busbar, and the output end of the control unit is connected to a control end of the sixth switch tube; and
the control unit is used to turn off the first switch tube and turn on the second switch tube upon the condition that the battery is in the charging state, and adjust the current output to the positive electrode of the battery only by controlling turn-on or turn-off of the sixth switch tube; and turn off the second switch tube and the sixth switch tube upon the condition that the battery is in the discharging state, and adjust the current output to the positive electrode of the busbar only by controlling turn-on or turn-off of the first switch tube.

6. The control circuit according to claim 1 or 2, wherein the current-limiting circuit comprises a first inductor and a full-bridge direct-current converting circuit;
a first end of the full-bridge direct-current converting circuit serves as the first end of the current-limiting circuit, a second end of the full-bridge direct-current converting circuit is connected to a first end of the first inductor, a second end of the first inductor serves as the second end of the current-limiting circuit, a third end of the full-bridge direct-current converting circuit serves as the third end of the current-limiting circuit, and a fourth end of the full-bridge direct-current converting circuit serves as the fourth end of the current-limiting circuit;
or, the first end of the first inductor serves as the first end of the current-limiting circuit, the second end of the first inductor is connected to the first end of the full-bridge direct-current converting circuit, the second end of the full-bridge direct-current converting circuit serves as the second end of the current-limiting circuit, the third end of the full-bridge direct-current converting circuit serves as the third end of the current-limiting circuit, the fourth end of the full-bridge direct-current converting circuit serves as the fourth end of the current-limiting circuit, and the control unit is connected to each switch tube of the full-bridge direct-current converting circuit; and
the control unit is specifically used to control turn-on or turn-off of each switch tube of the full-bridge direct-current converting circuit with a fixed turn-on duty cycle upon the condition that the current of the positive electrode of the battery is less than or equal to the preset threshold, or after the duration wherein the current of the positive electrode the battery is greater than the preset threshold is less than the preset time; and start timing when the current of the positive electrode of the battery is greater than the preset threshold, and control the turn-on or turn-off of each switch tube of the full-bridge direct-current converting circuit with a preset turn-on duty cycle after the duration wherein the current of the positive electrode the battery is greater than the preset threshold is greater than the preset time, and the preset turn-on duty cycle is less than the fixed turn-on duty cycle.

7. The control circuit according to any one of claims 2 to 6, wherein the input end of the control unit is further connected to an upper computer for outputting a charging instruction or a discharging instruction; and
the control unit is used to determine that the battery is in the charging state after receiving the charging instruction; and determine that the battery is in the discharging state after receiving the discharging instruction.

8. The control circuit according to any one of claims 1 to 7, wherein the control circuit further comprises a voltage stabilizing capacitor,
a first end of the voltage stabilizing capacitor is connected to the positive electrode of the busbar, a second end of the voltage stabilizing capacitor is connected to the negative electrode of the busbar, or the first end of the voltage stabilizing capacitor is connected to the positive electrode of the battery, and the second end of the voltage stabilizing capacitor is connected to the negative electrode of the battery.

9. A circuit board assembly, comprising the control circuit according to any one of claims 1 to 8.

10. A battery parallel system, comprising each battery for parallel operation, the circuit board assembly according to claim 9, a busbar connected to each battery through each circuit board assembly, and an upper computer connected to each circuit board assembly.
